# EUROPEAN PATENT APPLICATION

(11) **EP 2 599 824 A1**
(43) Date of publication of application: **05.06.2013**
(21) Application number: 11191313.3
(22) Date of filing: 30.11.2011
(51) Int. Cl.: C08K 3/34, C08K 9/04, B01J 35/00, C08G 12/06

(54) **Use of non-modified and modified inorganic particles having a layered structure as catalyst for synthesizing aminoplast-aldehyde precondensates and a method for synthesizing aminoplast-aldehyde precondensates**

(71) Applicant: Borealis Agrolinz Melamine GmbH, 4021 Linz (AT)
(72) Inventor: Dicke, René, 4060 Leonding (AT)
(74) Representative: Morawski, Birgit

(57) **Abstract**

The present invention relates to the use of inorganic particles having a layered structure as catalyst for the synthesis of aminoplast-aldehyde precondensates, wherein the inorganic particles are either non-modified or modified with at least one amino compound, wherein the at least one amino compound comprises at least one aliphatic amino group, whereby octadecyldiethanolamine is exempted, at least one amide group and/or at least one aromatic amino group. The invention relates furthermore to a method using non-modified and/or modified inorganic particles having a layered structure for synthesising aminoplast-aldehyde precondensates, the precondensates obtained by such a method and their use.

## Description

The invention relates to the use of non-modified and modified inorganic particles having a layered structure as catalyst for synthesizing aminoplast-aldehyde precondensates according to claim 1, a method for obtaining aminoplast-aldehyde precondensates according to claim 4, aminoplast-aldehyde precondensates obtainable by said method according to claim 12, and the use of said aminoplast-aldehyde precondensates according to claim 15.

Aminoplast resins, like melamine-formaldehyde-resins, urea-formaldehyde-resins and melamine-urea-formaldehyde-resins, are widely used as adhesives, respectively glues or binders for the manufacturing of WBP, like chipboards or particle boards (PB), OSB, MDF, LDF or HDF and plywood.

Formaldehyde based aminoplast resins, such as melamine-formaldehyde-resins, are in general synthesized in two chemically distinct steps.

In a first step a water-soluble or water-dilutable precondensate is obtained by reacting melamine and formaldehyde under alkaline conditions at a pH range between 8 and 10. Such precondensates comprise mainly methylolmelamines undergoing an oligomerization. The resulting oligomer mainly contains between two to five aminoplast nuclei. Precondensates are usually defined by their water tolerance and form a clear solution without turbidity.

The precondensates obtained in the first step are usually dilutable in water. Such water-dilutable melamine-formaldehyde resins are widely used as impregnating resins for the production of laminates with chemically and thermally durable surfaces. For this purpose a paper layer impregnated with the melamine-aldehyde-resin solution is pressed together with a substrate material at elevated temperature such that the resin finally cures to form a durable top layer.

In the following second synthesis step the precondensates are cured through heating or under acidic conditions by condensation of the methylolmelamines thereby forming a network of melamine-rings linked via methylene bridges or methylene ether bridges.

Thus, the reaction conditions for obtaining an oligomeric precondensate deviate strongly from the reaction conditions required for obtaining the final aminoplast polymer. The synthesis reaction of the precondensate occurs in an aqueous solution. When used as an adhesive the aqueous precondensate solution is sprayed and thus the water is reduced to a content of about 10 wt%. The same approach is taken when using the precondensate for impregnating paper where the paper sprayed with the aqueous precondensate solution is dried to water content of 8 to 10 wt%.

The application of inorganic layered particles in the synthesis process of aminoplast resins is known. For example, Cia et al. (Composites Part A, 2010, 41: 604-611) and Lei et al. (J. Appl. Polymer Sci., 2008, 109: 2442-2451) look at the influence of nanoclay particles on the curing behaviour of melamine-urea-formaldehyde resins and urea-formaldehyde resins, respectively. The two articles describe aminoplast resins with layered silicates such as montmorillonite and the influence of the silicates on the final curing of said aminoplast precondensates together with a hardener. Here, an effect of the layered silicate could be shown during the curing of resin precondensates to the final network of the thermoset and occurs only in presence of an acidic hardener.

Wang et al. (J.Nanosci.Nanotechnol., 2008, 8:1775-1781) describes the effect of organo modified and acid modified montmorillonite on curing of aminoplasts and formaldehyde to prepolymers/precondensates. The modification of montmorillonite starts here with a mixing of pristine montmorillonite with an acid or the long chain octadecyldiethanolamine for cation exchange reaction, which takes place after swelling of the layered montmorillonite. Such acidified montmorillonite and organic modified montmorillonite favor the polycondensation reaction of methylolmelamine while the pristine sodium montmorillonite inhibits the condensation reaction. It is believed that the curing reaction is catalyzed by the acidic character of the amine-modified montmorillonite.

As mentioned above aminoplast precondensates are synthesized by reaction of an amino compound such as urea or melamine with formaldehyde at a typical pH value, where the condensation reaction is controllable. In case of melamine resins a typical pH value is between 8 and 10 after the addition of melamine to a formaldehyde solution. The reaction temperature is thereby between 85 and 105°C. The reaction time is about 100 to 300 min depending on melamine type, preferred water tolerance of the resin and melamine-formaldehyde ratio. The reaction time could be reduced by lowering the pH value, what however makes the reaction difficult to control since a lowering of the pH value may initiate the final curing reaction and thus polymerisation of the precondensate.

Thus, the reaction time for obtaining the precondensate is relatively long. Therefore there is a desire to reduce the reaction time in particular when using the precondensates as glues. Alternatively, in some cases it could be desirable to have the same reaction time but to use a lower reaction temperature; this leads to energy savings.

It was therefore an object of the present invention to provide a way for obtaining aminoplast-aldehyde precondensate within a shorter time, in particular for optimizing the overall resin production process.

This and other objects were solved by using inorganic particles having a layered structure as catalysts according to claim 1 and a method for obtaining aminoplast-aldehyde precondensates according to claim 5.

Accordingly, inorganic particles having a layered structure are used as catalyst for the synthesis of aminoplast-aldehyde precondensates, wherein the inorganic particle is either non-modified or modified with at least one amino compound. The at least one amino compound comprises at least one aliphatic amino group, whereby octadecyldiethanolamine is exempted, at least one amide group and/or at least one aromatic amino group.

The compound used for modifying the inorganic particles is most preferably selected from a group of amino compounds which comprise at least two aliphatic amino groups, at least two aromatic amino groups, at least two amide groups or a combination thereof, such as at least one amide group and at least one of an aliphatic or aromatic amino group. Thus, the preferred modifying amino compounds are compounds, which can undergo oligomerisation and/or polymerisation reactions with an aldehyde.

The modifying amino compound is most preferably selected from the group containing triazines, in particular melamine, guanidine, urea, thiourea, dicyanamide and derivatives thereof. The inorganic particles are modified due to a cation exchange affected by the compounds as listed.

The melamine derivatives or triazine derivatives are preferably alkylated melamines, in particular mono-, di- or trialkylated melamines, like mono- di- or trimethylmelamine and mono- di- or tributylmelamine, diaminomethyltriazines (acetoguanamine) and/or diaminophenyltriazines (benzoguanamine) substituted by hydroxy-C₁-C₁₀-alkyl groups, hydroxy-C₁-C₁₀-alkyl(oxa-C₂-C₄-alkyl)₁₋₅ groups and/or by amino-C₁-C₁₂-alkyl groups, preferably 2-(2-hydroxyethylamino)-4,6-diamino-1,3,5-triazine, 2-(5-hydroxy-3-oxapentylamino)-4,6-diamino-1,3,5-triazine, 2,4,6-tris(6-aminohexylamino)-1,3,5-triazine and/or 2,4-(di-5-hydroxy-3-oxapentylamino)-6-methyl-1,3,5-triazine, ammeline, ammelide, melem, melon and/or melam.

Besides the preferred urea also suitable urea derivatives may be used such as thiourea and urea or thiourea substituted by C₁-C₁₀-alkyl groups, C₆-C₁₄-aryl groups, hydroxy-C₁-C₁₀-alkyl groups, hydroxy-C₁-C₄-alkyl(oxa-C₂-C₄-alkyl)₁₋₅ groups and/or by amino-C₁-C₁₂-alkyl groups, preferably 1,1-dimethyl-3-phenylurea, 3,3'-(4-methyl-1,3-phenylene)-bis-(1,1-dimethylurea).

Suitable inorganic particles having a layered structure are, for example, silicates, phosphates, arsenates, titanates, vanadates, niobates, molybdates and/or manganates, in particular sheet silicates or clays of the type consisting of montmorillonite, bentonite, kaolinite, muscovite, hectorite, fluorohectorite, canemite, revdite, grumantite, ilerite, saponite, beidelite, nontronite, stevensite, laponite, taneolite, vermiculite, halloysite, volkonskoite, magadite, rectorite, halloysite, kenyaite, sauconite, borofluorophlogopites and/or synthetic sheet silicates, the sheet silicates furthermore particularly preferably being sheet silicates having exchangeable cations of the type consisting of alkali metal, alkaline earth metal, aluminum, iron and/or manganese cations. Examples of suitable phosphates having a layer structure are compounds of the formula H₂[M^{IV}(PO₄)₂].ₓH₂O (M^{IV} = Zr, Ti, Ge, SN, Pb) and CaPO₄R-H₂O (R = CH₃; C₂H₅). Examples of suitable arsenates having a layer structure are compounds of the formula H₂[M^{IV}(AsO₄)₂].ₓH₂O and H[Mn(AsO₄)₂].ₓH₂O. Examples of suitable titanates having a layer structure are compounds of the formula Na₄Ti₈O₂₀.ₓH₂O and K₂Ln₂Ti₃O₁₀ₓH₂O. Synthetic sheet silicates are obtained, for example, by reacting natural sheet silicates with sodium hexafluorosilicate. Particularly preferred sheet silicates are those whose layers have an interlayer spacing of about 0.4 nm to 1.5 nm.

The particle size of above inorganic particles may be between 5 nm to 20,000 nm, preferably between 100 nm and 10,000 nm.

It is also a method for obtaining aminoplast-aldehyde precondensates provided using non-modified inorganic particles having a layered structure and/or inorganic particles having a layered structure and being modified with at least one first amino compound comprising the steps of
a) Adjusting the pH value of an aqueous aldehyde solution to a pH between 5.5 and 8 by using a base;
b) Adding at least one further second amino compound and at least one non-modified and/or modified inorganic particle having a layered structure to the aqueous aldehyde solution, wherein the second amino compound and the inorganic particle having a layered structure are added simultaneously or sequentially by adding at first the second amino compound to the aqueous aldehyde solution followed by the inorganic particle having a layered structure; and
c) further stirring the reaction mixture until a water tolerance of the mixture between 0.5 and 2.5 is obtained,
wherein at any of the steps a) to c) the respective solution or mixture is heated to a temperature between 70 and 105°C.

Thus, in a method according to the invention an inorganic particle having a layered structure is added either simultaneously or stepwise together with an amino compound to an almost neutral aldehyde solution. This means that the inorganic particle having a layered structure is not being mixed with an aldehyde before addition of the amino compound, but is rather added to a mixture of an aldehyde and an amino compound or is added simultaneously with an amino compound to the aldehyde solution.

This allows for the specific use of the inorganic particle having a layered structure as accelerating agent in the synthesis of an aminoplast-aldehyde-precondensate. The catalysing effect of the layered particle is most effectively used by adding the layered particle simultaneously or after addition of the amino compound, since the addition of the amino compound to the aldehyde solution is the actual start of precondensate formation.

The specific steps of the method according to the invention does not support a swelling of the inorganic particle having a layered structure as known from the prior art, which is usually applied for the dissecting of the layered particles into the respective single layers promoting the formation of nanocomposites.

The inorganic particle modified with a first amino compound and added to the reaction mixture in step b) according to the present method can be the same as the modified inorganic particles described previously or can be different. It is however preferred, if the modified inorganic particles used in the present method are the same as described above and are thus modified with the amino compounds as defined above.

The further second amino compound added to the reaction mixture in step b) according to the present method for synthesizing aminoplast-aldehyde-precondensates is preferably selected from an amino compound which can undergo an oligomerisation and/or polymerisation reaction with an aldehyde.

Thus, the further second amino compound used in the present method is preferably selected from a group of amino compounds which comprise at least two aliphatic amino groups, at least two aromatic amino groups, at least two amide groups or a combination thereof, such as at least one amide group and at least one aliphatic or aromatic amino group.

The further second amino compound as used in the present method can be the same or a different compound as the first amino compound used for modifying the inorganic particles. However, it mostly preferred if the further second amino compound used in the present method is the same as used as modifier for the inorganic particles.

The further second amino compound as used in the present method is most preferably selected from the group containing triazines, in particular melamine, guanidine, urea, thiourea, dicyanamide and derivatives thereof. The inorganic particles are modified due to a cation exchange affected by the compounds as listed.

The melamine derivatives or triazine derivatives are preferably alkylated melamines, in particular mono-, di- or trialkylated melamines, like mono- di- or trimethylmelamine and mono- di- or tributylmelamine, diaminomethyltriazines (acetoguanamine) and/or diaminophenyltriazines (benzoguanamine) substituted by hydroxy-C₁-C₁₀-alkyl groups, hydroxy-C₁-C₁₀-alkyl(oxa-C₂-C₄-alkyl)₁₋₅ groups and/or by amino-C₁-C₁₂-alkyl groups, preferably 2-(2-hydroxyethylamino)-4,6-diamino-1,3,5-triazine, 2-(5-hydroxy-3-oxapentylamino)-4,6-diamino-1,3,5-triazine, 2,4,6-tris(6-aminohexylamino)-1,3,5-triazine and/or 2,4-(di-5-hydroxy-3-oxapentylamino)-6-methyl-1,3,5-triazine, ammeline, ammelide, melem, melon and/or melam,.

Besides the preferred urea also suitable urea derivatives may be used such as thiourea and urea or thiourea substituted by C₁-C₁₀-alkyl groups, C₆-C₁₄-aryl groups, hydroxy-C₁-C₁₀-alkyl groups, hydroxy-C₁-C₄-alkyl(oxa-C₂-C₄-alkyl)₁₋₅ groups and/or by amino-C₁-C₁₂-alkyl groups, preferably 1,1-dimethyl-3-phenylurea, 3,3'-(4-methyl-1,3-phenylene)-bis-(1,1-dimethylurea).

In a first variant of the method for obtaining aminoplast-aldehyde precondensates, the method comprises the steps of:
a1) Adjusting the pH value of an aqueous aldehyde solution to a pH between 5.5 and 8 by using a base;
b1) Adding simultaneously at least one further second amino compound and at least one non-modified and/or modified inorganic particle having a layered structure to the aqueous aldehyde solution;
c1) Heating the mixture to a temperature between 70 and 105°C;
d1) Opt. Adapting the temperature after a predetermined time period to 70 to 95°C; and
e1) further stirring the reaction mixture until a water tolerance of the mixture between 0.5 and 2.5 is obtained

A second variant of the present method for obtaining aminoplast-aldehyde precondensates comprises the steps of
a2) Adjusting the pH value of an aqueous aldehyde solution to a pH between 5.5 and 8 by using a base;
b2) Heating the aqueous aldehyde solution to a temperature between 70 and 105°C;
c2) Adding simultaneously at least one further second amino compound and at least one non-modified and/or modified inorganic particle having a layered structure to the heated aqueous aldehyde solution;
d2) Opt. Adapting the temperature after a predetermined time period to 70 to 95°C; and
e2) further stirring the reaction mixture until a water tolerance of the mixture between 0.5 and 2.5 is obtained

A third variant of the present method for obtaining aminoplast-aldehyde precondensates comprises the steps of
a3) Adjusting the pH value of an aqueous aldehyde solution to a pH between 5.5 and 8 by using a base;
b3) Adding at least one further second amino compound to the aqueous aldehyde solution;
c3) Heating the mixture obtained in the previous step to a temperature between 70 and 105 °C;
d3) Adding at least one non-modified and/or modified inorganic particle having a layered structure to the heated mixture of the previous step;
e3) Opt. Adapting the temperature after a predetermined time period to 70 to 95°C; and
f3) further stirring the reaction mixture until a water tolerance of the mixture between 0.5 and 2.5 is obtained

A fourth variant of the present method for obtaining aminoplast-aldehyde precondensates comprises the steps of
a4) Adjusting the pH value of an aqueous aldehyde solution to a pH between 5.5 and 8 by using a base;
b4) Heating the mixture obtained in the previous step to a temperature between 70 and 105°C;
c4) Adding at least one further second amino compound to the aqueous aldehyde solution;
d4) Adding at least one non-modified and/or modified inorganic particle having a layered structure to the heated mixture of the previous step;
e4) Opt. Adapting the temperature after a predetermined time period to 70 to 95°C; and
f4) further stirring the reaction mixture until a water tolerance of the mixture between 0.5 and 2.5 is obtained

In a preferred embodiment of the present method the total reaction time for obtaining the aminoplast-aldehyde precondensate is reduced by 10 to 80%, preferably by 20 to 60% in respect to the conventional method without using non-modified and/or modified inorganic particles as accelerating agents. It is for instance preferred if the total reaction time does not exceed 60 min, preferably 50 min, in particular preferably 40 min. Thus, adding a certain amount of at least one modified or non-modified inorganic layered particles or a mixture of different types of inorganic particles reduces the reaction time required to obtain the desired aminoplast-aldehyde precondensate drastically.

The advantage of using inorganic non-modified and modified layered particle in contrast of using acids as accelerating agents is that the pH value remains high, i.e. at a value between 9 and 10 due to the basic character of the used inorganic particles so that the precondensation reaction is controllable. Thus, when using non-modified and amino compound modified layered silicates the precondensate reaction is faster but controllable. Thereby it is in particular surprising that the layered inorganic particles are able to catalyse the precondensation reaction at all due to their mainly basic character.

Another advantage of the present method is that it allows also for the synthesis of aminoplast-aldehyde-precondensates at a lower reaction temperature at the same reaction time. The reaction temperature can be for instance decreased to 40 to 80°C.

The amount of non-modified or modified inorganic particles added to the reaction mixture of the further second amino compound and aldehyde may be between 0.1 to 20 wt %, preferably between 0.1 to 10 wt %, in particular preferably between 0.1 and 5 wt% in respect to the amounts of the further second amino compound and aldehyde within the reaction mixture.

The at least one aldehyde used in the present method is preferably a C₁-C₁₀-aldehyde, in particular formaldehyde, acetaldehyde, trimethylolacetaldehyde, acrolein, furfurol, glyoxal and/or glutaraldehyde, particularly preferably formaldehyde.

As suitable bases for adjusting the pH value inorganic or organic bases such as KOH, NaOH, Ca(OH)₂, amines, alkanolamines are preferably used.

The preferred ratio of the further second amino compound used in the present method like melamine or urea to aldehyde is 0.9 to 3.0, preferably 1.0 to 2.0.

It may also be of an advantage to add further additives to the reaction mixture, like an hydrophobic agent selected from a group comprising paraffin, waxes, C₁₀-C₃₀ fatty acid derivatives or water dispersion of paraffin and waxes, in particular 60 wt% water dispersions of paraffin and waxes.

After completion of the reaction the precondensate mixture synthesised according to the present method may be cooled, spray dried or freeze dried. The further processing depends on the specific application and further work up which may be required.

The object of the present invention is also being solved by an aminoplast-aldehyde precondensate according to claim 14.

Accordingly an aminoplast-aldehyde precondensate obtainable by the present method comprises at least one inorganic particle having a layered structure. The amount of inorganic layered particles within the precondensate is preferably 0.1 to 20 wt %, preferably between 0.1 to 10 wt %, in particular preferably between 0.1 and 5 wt%.

The aminoplast-aldehyde precondensate obtained using the method according to the invention may thus comprise layered non-modified inorganic particles did not undergo any cation exchange of the native cations present between the layers. Rather, the inorganic particles are maintained in the native pristine form within the liquid aminoplast-aldehyde precondensate.

The aminoplast-aldehyde precondensate obtained using the method according to the invention may also comprise inorganic particles being modified by using at least one amino compound which comprises at least one amino group, whereby octadecyldiethanolamine is exempted, at least one amide group and/or at least one aromatic amino group as previously described in more detail.

When using the present aminoplast-aldehyde precondensates for instance as solution for impregnating surfaces, surfaces are provided having an improved scratch resistance, improved micro scratch resistance, improved haptic e.g. warmer surface feeling, improved hardness and good transparency i.e. the transparency does not deteriorates but rather remains the same.

Furthermore, the present aminoplast-aldehyde precondensates have preferably an average molecular weight of 150 - 1000.

The present aminoplast-aldehyde precondensate may have storage stability at room temperature of at least 48 hours.

The present aminoplast-aldehyde precondensate may be used as glue, for impregnating surfaces such as of laminates or paper.

The object of the present invention is also being solved by the use of at least one inorganic particle having a layered structure as an accelerating agent when preparing aminoplast-aldehyde precondensates as described above.

The present invention is further explained in more detail by the means of the following examples.

### Comparative Example 1.1

The conventional synthesis of a precondensate is carried out by starting with 110 g formaldehyde (36%). 44g water and adjusting the pH value to 7.0 by using sodium hydroxide. After addition of 79 g melamine the reaction mixture is heated to 90°C until a positive drop test is achieved, i.e. one drop of precondensate solution provides a steady precipitation in 100 ml water. The further condensation is continued for a better control at 85°C until a water tolerance of the precondensate solution of 1.2 is achieved (precondensate / water = 1.2 / 1.0).

The synthesis of this conventional resin precondensate requires a total synthesis time of 120 min, whereat the precondensation is carried out 80 min at 90°C and further 40 min at 85°C.

### Example 1.2:

In a round flask 110 g formaldehyde (36%), and 44 g water are stirred and the pH value is adjusted to 7.0 by using sodium hydroxide. 79 g Melamine are added and subsequently 6 g Na-MMT (sodium montmorillonite) are suspended for 1 min by the means of Thurrax. The mixture is stirred at 90°C and the dropping test is carried out. If the test is positive then the reaction is continued at 85°C until a water tolerance of 1.2 (water to precondensate) is achieved. The reaction is interrupted by fast cooling.

The total reaction time is 35 min, whereat the precondensation at 90°C is carried out for 20 min and at 85°C for 15 min.

### Example 1.3:

10g of melamine is suspended in 400 ml water and 1.1 g HCI (37%) is added. Simultaneously, a 40 g of sodium montmorillonite is suspended in 800 ml water. Now, the formed melamine hydrochloride suspension is added at 80°C to the sodium montmorillonite suspension and stirred for 1 hour.

The hot suspension is filtrated, intensively washed with hot water until it is chloride free. Finally the product is dried at 105°C for 6 hours.

In a round flask 110 g formaldehyde (36%), and 44 g water are stirred and the pH value is adjusted to 7.0 by using sodium hydroxide. 79 g Melamine are added and 3 g of melamine modified montmorillonit (as prepared above) are suspended for 1 min by the means of Thurrax. The mixture is stirred at 90°C, and the dropping test is carried out. If the test is positive then the reaction is continued at 85°C until a water tolerance of 1.2 (water to precondensate) is achieved. The reaction is interrupted by fast cooling.

The total reaction time is 25 min, whereat the precondensation at 90°C is carried out for 16 min and at 85°C for 9 min.

## Claims

1. Use of inorganic particles having a layered structure as catalyst for the synthesis of aminoplast-aldehyde precondensates, wherein the inorganic particles are either non-modified or modified with at least one amino compound, wherein the at least one amino compound comprises at least one aliphatic amino group, whereby octadecyldiethanolamine is exempted, at least one amide group and/or at least one aromatic amino group.

2. Use of inorganic particles according to claim 1, **characterized in that** the at least one amino compound is selected from a group of amino compounds which comprise at least two aliphatic amino groups, at least two aromatic amino groups, at least two amide groups or a combination thereof.

3. Use of inorganic particles according to claim 1 or 2, **characterized in that** the at least one amino compound is selected from the group containing triazines, in particular melamine, guanidine, urea, thiourea, dicyanamide and derivatives thereof.

4. Use of inorganic particles according to one of the preceding claims, **characterized in that** the at least one inorganic particle is selected from a group containing silicates, alumosilicates, phosphates, arsenates, titanates, vanadates, niobates, molybdates and/or manganates, in particular sheet silicates or clays.

5. Method for obtaining aminoplast-aldehyde precondensates using non-modified inorganic particles having a layered structure and/or inorganic particles having a layered structure and being modified with at least one first amino compound comprising the steps of
a) Adjusting the pH value of an aqueous aldehyde solution to a pH between 5.5 and 8 by using a base;
b) Adding at least one further second amino compound and at least one non-modified and/or modified inorganic particle having a layered structure to the aqueous aldehyde solution, wherein the second amino compound and the inorganic particle having a layered structure are added simultaneously or sequentially by adding at first the second amino compound to the aqueous aldehyde solution followed by the inorganic particle having a layered structure; and
c) further stirring the reaction mixture until a water tolerance of the mixture between 0.5 and 2.5 is obtained,
wherein at any of the steps a) to c) the respective solution or mixture is heated to a temperature between 70 and 105°C.

6. Method according to claim 5 **characterised by** the steps of
a1) Adjusting the pH value of an aqueous aldehyde solution to a pH between 5.5 and 8 by using a base;
b1) Adding simultaneously at least one further second amino compound and at least one non-modified and/or modified inorganic particle having a layered structure to the aqueous aldehyde solution;
c1) Heating the mixture to a temperature between 70 and 105°C;
d1) Opt. Adapting the temperature after a predetermined time period to 70 to 95°C; and
e1) further stirring the reaction mixture until a water tolerance of the mixture between 0.5 and 2.5 is obtained

7. Method according to claim 5 **characterised by** the steps of
a2) Adjusting the pH value of an aqueous aldehyde solution to a pH between 5.5 and 8 by using a base;
b2) Heating the aqueous aldehyde solution to a temperature between 70 and 105°C;
c2) Adding simultaneously at least one further second amino compound and at least one non-modified and/or modified inorganic particle having a layered structure to the heated aqueous aldehyde solution;
d2) Opt. Adapting the temperature after a predetermined time period to 70 to 95°C; and
e2) further stirring the reaction mixture until a water tolerance of the mixture between 0.5 and 2.5 is obtained

8. Method according to claim 5 **characterised by** the steps of
a3) Adjusting the pH value of an aqueous aldehyde solution to a pH between 5.5 and 8 by using a base;
b3) Adding at least one further second amino compound to the aqueous aldehyde solution;
c3) Heating the mixture obtained in the previous step to a temperature between 70 and 105°C;
d3) Adding at least one non-modified and/or modified inorganic particle having a layered structure to the heated mixture of the previous step;
e3) Opt. Adapting the temperature after a predetermined time period to 70 to 95°C; and
f3) further stirring the reaction mixture until a water tolerance of the mixture between 0.5 and 2.5 is obtained

9. Method according to claim 5 **characterised by** the steps of
a4) Adjusting the pH value of an aqueous aldehyde solution to a pH between 5.5 and 8 by using a base;
b4) Heating the mixture obtained in the previous step to a temperature between 70 and 105°C;
c4) Adding at least one further second amino compound to the aqueous aldehyde solution;
d4) Adding at least one non-modified and/or modified inorganic particle having a layered structure to the heated mixture of the previous step;
e4) Opt. Adapting the temperature after a predetermined time period to 70 to 95°C; and
f4) further stirring the reaction mixture until a water tolerance of the mixture between 0.5 and 2.5 is obtained

10. Method according to one of the claims 5 to 9, **characterised in that** the inorganic particles having a layered structure are selected from a group containing silicates, alumosilicates, phosphates, arsenates, titanates, vanadates, niobates, molybdates and/or manganates, in particular sheet silicates or clays.

11. Method according to one of the claims 5 to 10, **characterised in that** the inorganic particles are modified with at least one first amino compound as described in one of the claims 1 to 4.

12. Method according to one of the claims 5 to 11, **characterized in that** the at least one further second amino compound added to the reaction mixture is selected from a group of amino compounds which comprise at least two aliphatic amino groups, at least two aromatic amino groups, at least two amide groups or a combination thereof.

13. Method according to one of the claims 5 to 12, **characterized in that** the at least one amino compound added to the reaction mixture is selected from the group containing triazines, in particular melamine, guanidine, urea, thiourea, dicyanamide and derivatives thereof.

14. Aminoplast-aldehyde precondensate obtainable by a method according to one of the claims 5 to 13.

15. Use of an aminoplast-aldehyde precondensate according to claim 14 as glue, for impregnating surfaces such as of laminates or paper.
